# EUROPÄISCHE PATENTANMELDUNG

(11) **EP 0 846 536 A2**
(43) Veröffentlichungstag der Anmeldung: **10.06.1998**
(21) Anmeldenummer: 97121001.8
(22) Anmeldetag: 29.11.1997
(51) Int. Cl.: B28B 17/00, B28B 15/00

(54) **Verfahren zur Erkennung des Wechsels von Ziegeltypen in einer zumindest teilautomatisierten Fertigungsstrasse**

(30) Priorität: 03.12.1996 DE 19649959
(71) Anmelder: EISENMANN MASCHINENBAU KG (Komplementär: EISENMANN-Stiftung), D-71032 Böblingen (DE)
(72) Erfinder: Schwarz, Helmut, 71032 Böblingen (DE); Bodingbauer, Gerald, 71083 Herrenberg (DE)
(74) Vertreter: Fürst, Siegfried

(57) **Zusammenfassung**

Verfahren zur Erkennung des Wechsels von Ziegeltypen in einer zumindest teilautomatisierten Fertigungsstraße für Ziegel, insbesondere für Mauerziegel.
Der Wechsel des Ziegeltypes innerhalb des Materialflusses einer Fertigungsstraße wird nach dem neuen Verfahren durch eine in den Materialfluß gesetzte Markierung angezeigt, wobei diese Markierung von den einzelnen Stationen der Fertigungsstraße unmittelbar vorgeordneten Sensoren erkannt und von letzteren jeweils ein Signal an die Steuereinheit bzw. -einheiten gesandt wird;
die Reihenfolge der Ziegeltypen ist der bzw. den Steuereinheiten bereits vorgegeben. Als Markierung wird vorzugsweise ein im Ziegelformat der Fertigungsstraße hergestellter Blindziegel genutzt.

## Beschreibung

Die Erfindung betrifft ein Verfahren zur Erkennung des Wechsels von Ziegeltypen in einer zumindest teilautomatisierten Fertigungsstraße und findet vorrangig Anwendung in einem Ziegelwerk, in dem auf umrüstbaren Fertigungsstraßen nacheinander folgend verschiedene Ziegeltypen gefertigt werden. Bei bekannten Fertigungsstraßen für Ziegel, insbesondere Mauerziegel, werden die Wechsel zwischen den nacheinander chargenweise in einem Ziegelformer hergestellten Ziegeltypen mittels Schieberegister, Zählvorgänge oder visuell erfaßt. Die jeweils dabei ermittelten bzw. erzeugten Signale werden zur Steuerung der in der Fertigungsstraße dem Ziegelformer nachgeordneten Anlagen bzw. Bearbeitungsstationen, wie z.B. Trockner, Brennofen, Engobe-, Schleif-, Handhabe- o. dgl. -station, genutzt, da die verschiedenen Ziegeltypen, die jeweils eine spezielle Formgebung bzw. Materialzusammensetzung haben, in jedem der besagten Anlagen eine spezifische technologische Bearbeitung erfahren. Diese Arbeits- und Steuerungsmethode ist jedoch fehlerhaft, wenn zwischen den einzelnen Stationen der Fertigungsstraße fehlerhafte Ziegel aus dem Materialfluß entfernt werden; der technologisch bedingte Ausschuß erhöht sich.

Daher besteht die Aufgabe der Erfindung vor allem darin, ein Verfahren zu entwickeln, das den einzelnen Stationen der Fertigungsstraße stückgenau den Wechsel zwischen zwei nacheinander folgenden Ziegeltypen anzeigt und zudem mit geringem technischökonomischen Aufwand realisierbar sowie an bestehenden Fertigungsstraßen nachrüstbar ist.

Die Aufgabe wird durch ein Verfahren zur Erkennung des Wechsels von Ziegeltypen in einer zumindest teilautomatisierten Fertigungsstraße nach dem Patentanspruch 1 gelöst. Die nachgeordneten Patentansprüche 2 bis 6 zeigen vorteilhafte Weiterbildungen des erfinderischen Grundgedankens auf.
Mit dem neuen Verfahren wird absolut treffsicher und stückgenau der Wechsel des Ziegeltypes erkannt, wodurch der technologische Fertigungsaufwand, insbesondere der Personalaufwand sowie Ausschuß und Maschinenrüst- bzw. Taktzeiten, gesenkt werden kann. Zudem zeichnet sich das neue Verfahren durch geringe Herstellungs- und Wartungskosten sowie flexible Einsetzbarkeit aus.

Folgend wird das neue Verfahren anhand von schematisch in Zeichnungen dargestellten Ausführungsbeispielen näher erläutert. Die Zeichnungen zeigen dabei:
- Fig. 1: ein Schema einer Fertigungsstraße eines Ziegelwerkes,
- Fig. 2: einen Teilabschnittaus Fig. 1 in Seitenansicht mit gesetzter Markierung und einer möglichen Anordnung einer Sensoreinheit,
- Fig. 3 und Fig. 3a: mögliche Varianten des Ziegeltransportes und der Anordnung der Markierung.

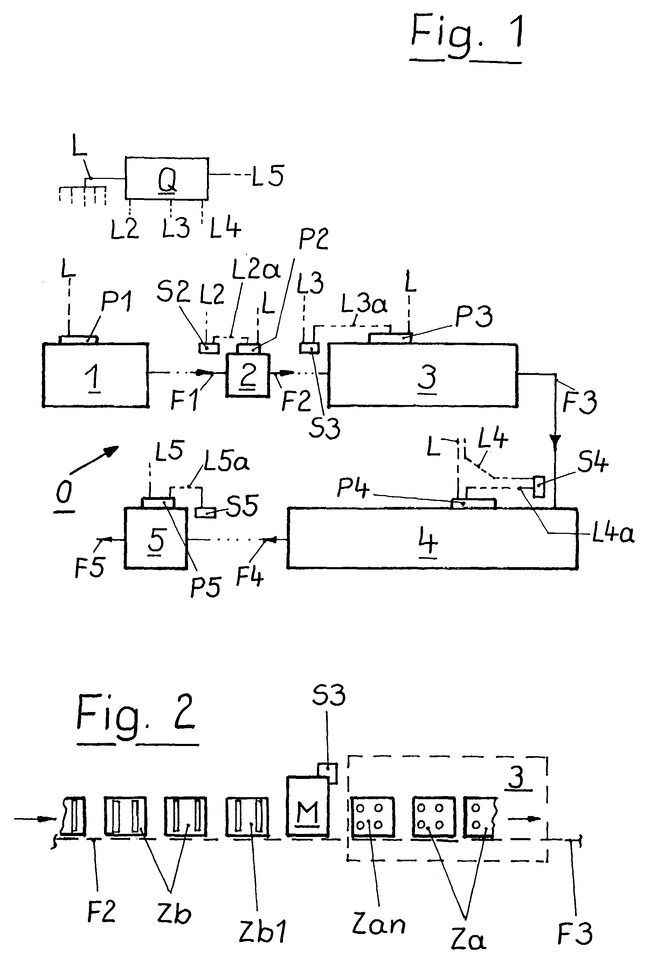

In der Fig. 1 ist in schematischer Darstellung ein möglicher Aufbau einer Fertigungsstraße 0 eines Ziegelwerkes dargestellt, an der das neue Verfahren zur Erkennung des Wechsels von Ziegeltypen anwendbar ist.
Die Fertigungsstraße 0 besteht hier aus einem Ziegelformer 1, einer Bearbeitungsstation 2, die z.B. zum Wenden, Drehen, Engobieren o. dgl. dient, einer Trocknungsstation 3, einer Brennstation 4 und einem Umsetzer bzw. Stapler 5, Alle Stationen 1 bis 5 sind für die Erstellung bzw. Bearbeitung von verschiedenen Ziegeltypen ausgelegt, über Leitungen L mit einer zentralen Steuereinheit Q verbunden und/oder mit jeweils einer programmierbaren Steuereinheit P₁... P₅ ausgestattet. Der Transport der Ziegel Z erfolgt mit jeweils die Stationen 1 bis 5 verbindenden Fördereinrichtungen F₁ bis F₄, die als Förderband- oder Förderrollenförderer o.dgl. ausgebildet sind. Die Fördereinrichtung F₅ übernimmt den Abtransport der versandfertigen Ziegel.

An einer derartigen Fertigungsstraße 0 wird nun das neue Verfahren in der Art angewandt, daß beim Wechsel des Ziegeltypes vorzugsweise bereits im Ziegelformer 1 zwischen dem letzten Ziegel Zₐₙ eines Ziegelypes Zₐ und dem ersten Ziegel Z_{b1} des nachfolgenden anderen Ziegeltypes Z_{b} eine Markierung M, die vorzugsweise ein vom Ziegelformer 1 hergestellter Blindziegel M mit gegenüber den Ziegeltypen wesentlich abweichenden geometrischen Abmessungen ist, gesetzt wird, siehe hierzu auch die Fig. 2.
Zudem ist den Stationen 2 bis 5 der Fertigungsstraße 0, an denen auf den jeweiligen Ziegeltyp Zₐ, ... Z_{y} abgestimmte technologische Parameter eingestellt werden müssen, jeweils eine Sensoreinheit S₂, ... S₅ unmittelbar vorgelagert. über Signalleitungen L₂, ... L₅ bzw. L₂ₐ... L₅ₐ sind diese Sensoreinheiten S₂, ... S₅ mit der zentralen Steuereinheit Q und/oder jeweils mit der betreffenden programmierbaren Steuereinheit P₂, ... P₅ verbunden.
Der Wechsel des Ziegeltypes im Materialfluß wird durch die Erfassung der Markierung M mit der vorgenannten jeweiligen Sensoreinheit S₂ ... S₅ und Aussendung eines Steuersignales an die betreffende Steuereinheit P₂, ... P₅ bzw. Q gemeldet, wobei letztere P₂, ... P₅; Q die betreffende Station 2, ... 5 auf den nun folgenden anderen Ziegeltyp einstellt; die Reihenfolge der Ziegeltypen ist in den Steuereinheiten Q, P₁, ... P₅ bereits einprogrammiert.
Nach der letzten Sensoreinheit S₅ oder am Ende der Fertigungsstraße Q werden die Markierungen M aus dem Materialfluß herausgenommen und mit den Ausschußziegeln einer Verwertung bzw. Aufbereitung zugeführt.

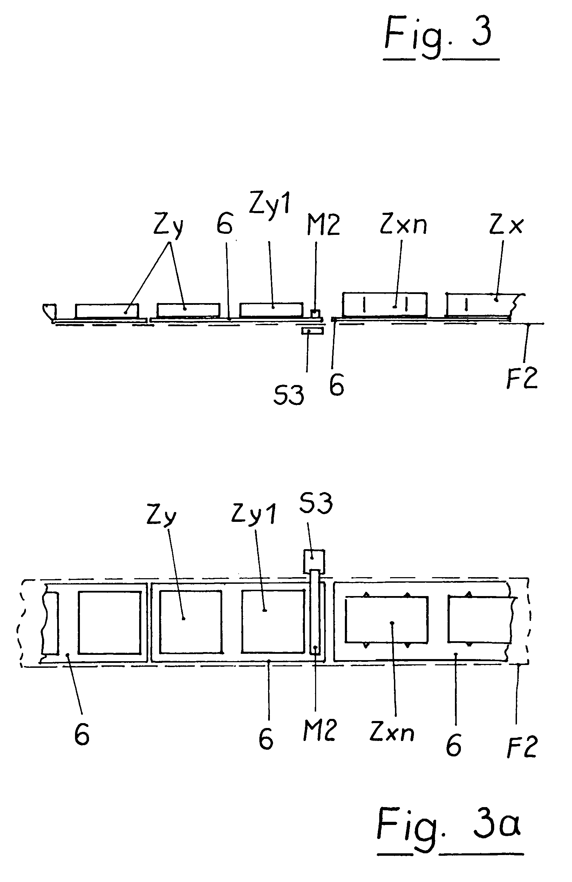

Eine Weiterbildung des neuen Verfahrens sieht nun noch vor, daß die Markierung ein wiederverwendbarer geometrischer Körper M₂ ist, siehe hierzu Fig. 3 und 3a, dessen Abmessungen so gewählt sind, daß er, M₂, zwischen zwei Ziegel Zₓₙ und Z_{y1} plaziert, letztere zumindest einseitig überragt.
Dieser Körper M₂ wird vorzugsweise nach dem Ziegelformer 1 zwischen die betreffenden Ziegel, hier Zₓₙ und Z_{y1}, gesetzt und vom Ende der Fertigungsstraße 0 wieder in ein nicht dargestelltes, im Anfangsbereich der Fördereinrichtung F₁ stationiertes Magazin rückgeführt.

Vorzugsweise wird der Körper M₂ auch dann eingesetzt, wenn die Ziegel Z auf Paletten 6 befördert werden. Die verwendeten Sensoreinheiten S₂ bis S₅ sind vorzugsweise mit optischen Sensoren bestückt; im Bedarfsfall können auch mechanische Taster eingesetzt werden.

Weitere Merkmale von Weiterbildrnngen der Erfindung gehen außer aus den Unteransprüchen auch aus der Beschreibung und Zeichnung hervor.

Zudem liegt es noch im Wesen der Erfindung, statt der beschriebenen Markierungen M und M₂ andere, in den Zeichnungen nicht gezeigte Markierungen zu nutzen derart, daß in bzw. an dem ersten Ziegel eines jeden anderen Ziegeltypes ein Metallplättchen, eine Farbmarkierung oder ähnliches angebracht wird; die Sensoren werden dann dementsprechend ausgelegt. Diese vorgenannten Markierungen können aber auch an den entsprechenden ersten, Ziegel tragenden Paletten angeordnet werden oder als jeweils erste Palette wird eine Palette mit Markierung im Palettenkörper eingesetzt.

Abschließend ist nun noch festzuhalten, daß die von den Sensoren in Bezug auf die besagten Markierungen erzeugten Signale auch zur visuellen Darstellung des Teile- (Ziegel-)flusses mittels Datentechnik (Bildschirm) nutzbar sind. Es ist also darstellbar, welcher Ziegeltyp sich gerade in welcher Station der Fertigungsstraße befindet.

### Bezugsziffernverzeichnis

- 0: Fertigungsstraße
- 1: Ziegelformer
- 2: Bearbeitungsstation (z.B. Wenden, Drehen, Glasieren o.dgl.)
- 3: Trocknungsstation
- 4: Brennstation
- 5: Umsetzer, Stapelgerät o.dgl.
- 6: Palette
- F₁, F₂, F₃:
- F₄, F₅: Fördereinrichtungen
- S₂, S₃,:
- S₄, S₅: Sensoreinheiten
- L, L₂, L₂ₐ,:
- L₃, L_{3a,}:
- L₄, L₄ₐ,:
- L₅, L₅ₐ,: Signalleitungen
- P₁, P₂, P₃,:
- P₄, P₅,: programmierbare Steuereinheiten
- Q: zentrale Steuereinheit
- M: Blindziegel (Markierung)
- M₂: Körper (Markierung)
- Z: Ziegel
- Zₐ, Z_{b},:
- Zₓ, Z_{y},: Ziegeltypen
- Z_{b1}, Z_{y1}: erste Ziegel
- Zₐₙ, Zₓₙ: letzte Ziegel

## Patentansprüche

1. Verfahren zur Erkennung des Wechsels von Ziegeltypen in einer zumindest teilautomatisierten Fertigungsstraße, die einen Ziegelformer (1), mindestens eine weitere Station (2, ... 5) zum Wenden, Drehen, Schleifen, Trocknen, Brennen o. dgl. der Ziegel (Z), und mindestens eine, die vorgenannten Stationen (1 und 2, ... 5) verbindende und Ziegel (Z) transportierende Fördereinrichtung (F₁, ... F₅) sowie mindestens eine Steuereinheit (Q bzw. P₂, ... P₅) aufweist,
**dadurch gekennzeichnet,**
daß zwischen dem letzten Ziegel (Zₐₙ, Zₓₙ) eines Ziegeltypes (Zₐ, Zₓ) und dem ersten Ziegel (Z_{b1}, Z_{y1}) des nachfolgenden anderen Ziegeltypes (Z_{b}, Z_{y}) eine Markierung (M, M₂) gesetzt wird, die von einer jeweils der weiteren Station (2, ... 5) der Fertigungsstraße (0) vorgelagerten Sensoreinheit (S₂, ... S₅) erfaßt und als Signal über die jeweilige Signalleitung (L₂, L₂ₐ, ..., L₅, L₅ₐ) der jeweiligen Steuereinheit (Q bzw. P₁, ... P₅) zugeleitet wird.

2. Verfahren nach Anspruch 1,
**dadurch gekennzeichnet,**
daß die Markierung (M, M₂) im Ziegelformer (1) gesetzt wird.

3. Verfahren nach Anspruch 2,
**dadurch gekennzeichnet,**
daß die Markierung ein Blindziegel (M) ist, der in seinen geometrischen Abmessungen wesentlich von den gefertigten Ziegeltypen (Zₐ,.. .. Z_{y}) abweicht.

4. Verfahren nach Anspruch 1,
**dadurch gekennzeichnet,**
daß die Markierung (M₂) nach dem Ziegelformer (1), aber noch vor der ersten Sensoreinheit (S₂ bzw. ... S₅) zwischen die besagten Ziegel (Zₐₙ, Zₓₙ und Z_{b1}, Z_{y1}) auf die Fördereinrichtung (F₁ bzw. ...F₄) gesetzt wird.

5. Verfahren nach mindestens einem der Ansprüche 1 bis 4,
**dadurch gekennzeichnet,**
daß die Markierung (M, M₂) auf eine Ziegel (Z) tragende Palette (6) aufgesetzt wird.

6. Verfahren nach mindestens einem der Ansprüche 1, 2, 4 und 5,
**dadurch gekennzeichnet,**
daß die Markierung ein wiederverwendbarer geometrischer Körper (M₂) ist, der in Förderrichtung gesehen die Ziegel seitlich überragt.
